# EUROPEAN PATENT SPECIFICATION

(11) **EP 3 601 978 B1**
(45) Date of publication and mention of the grant of the patent: **20.01.2021**
(21) Application number: 18719295.0
(22) Date of filing: 29.03.2018
(51) Int. Cl.: B60T 8/172, B60T 13/66, B60T 17/22, G01L 5/28, B60L 3/10, B60T 8/17, G01M 17/08

(54) **A SYSTEM AND A METHOD FOR SIMULATING THE CONTACT BETWEEN WHEEL AND RAIL FOR DETECTING THE ADHESION VALUE**
SYSTEM UND VERFAHREN ZUR SIMULATION DES KONTAKTES ZWISCHEN RAD UND SCHIENE ZUM NACHWEIS DES HAFTWERTS
SYSTÈME ET PROCÉDÉ POUR SIMULER LE CONTACT ENTRE UNE ROUE ET UN RAIL POUR DÉTECTER LA VALEUR D'ADHÉRENCE

(30) Priority: 31.03.2017 IT 201700035856
(43) Date of publication of application: 05.02.2020
(73) Proprietor: Faiveley Transport Italia S.p.A., 10045 Piossasco (TO) (IT)
(72) Inventor: IMBERT, Luc, I-10128 Torino (IT); FREA, Matteo, I-10143 Torino (IT)
(74) Representative: Deambrogi, Edgardo
(86) International application number: PCT/IB2018/052170
(87) International publication number: WO 2018/178914

(56) References cited:
- JP-A- 2014 032 087
- KR-B1- 100 721 607
- US-A- 4 800 748
- US-A1- 2017 059 452

## Description

### Technical field

The present invention is, in general, in the field of systems and methods for detecting an adhesion value between a wheel of a railway vehicle and a rail; in particular, the invention refers to a system and a method for simulating the contact between wheel and rail for detecting the adhesion value.

### Prior Art

The field of methods and systems for analyzing the adhesion value generated by the contact between a wheel of a railway vehicle and a rail is an area wherein important studies are being carried out in search of new solutions.

In the prior art, systems are known for simulating in the laboratory the contact between the wheels of a railway vehicle and the rails.

In such systems, a cylindrical roller is used to simulate a rail for railway vehicles. At least one wheel is placed in sliding contact on the outer perimeter of this roller. The roller is an approximation of the rail, as its cylindrical shape changes the angle of attack between the wheel and the rail.

To reproduce the same conditions of motion of the wheels of a railway vehicle on a track, the angular speed of the wheels and the angular speed of the roller are controlled independently, for example, by using motors.

These systems have also been used to analyze the adhesion between wheel and rail in case of rail contamination. Rail contamination may be due to the presence of water, rotting leaves, oil or other debris.

In known systems, in order to simulate rail contamination, contaminant injection systems are used which inject a contaminant onto the outer perimeter of the roller, near the point of contact with the wheel.

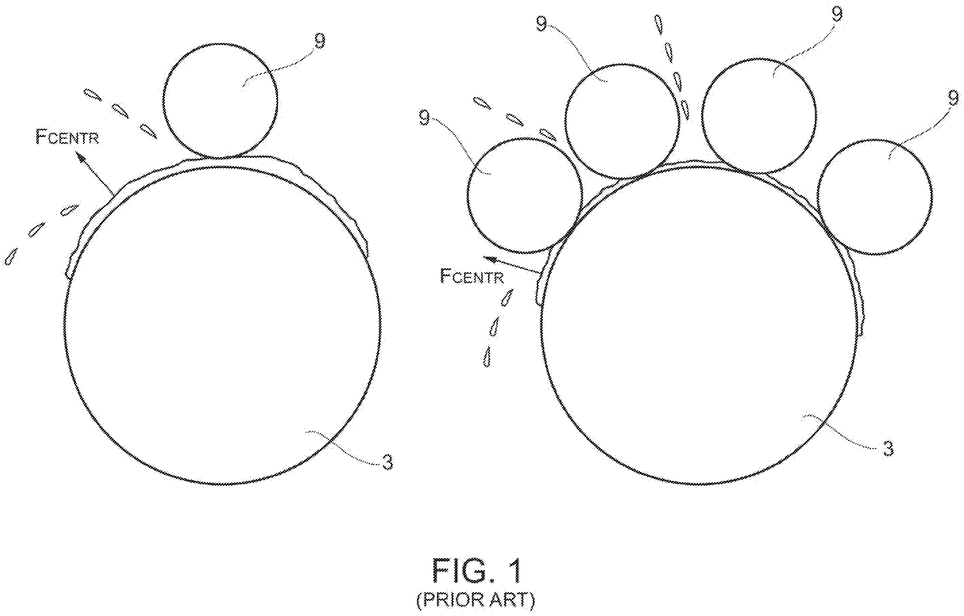

Disadvantageously, as can be seen in figure 1, the contaminant substance deposited on the roller by the injection system is flung away by the roller due to centrifugal force, Fcentr, proportional to the square of the angular speed of the roller and the radius of the roller.

This disadvantage does not allow for a stable regulation of the contaminant on the roller surface. As the angular speed of the roller increases, the centrifugal force tends to separate the contaminant from the surface of the roller of interest.

Moreover, this disadvantage introduces a cleaning effect (unrealistic cleaning) between one wheel and the next wheel due to the contaminant being flung away from the roller in the space between one wheel and the next wheel.

Furthermore, the simulation of the presence of the contaminant is limited only to some types of contaminants, to some quantities, or to a limited range of angular speed of the roller.

Examples of systems and methods for simulating the contact between a wheel and a rail are given by the documents US4800748, US2017/059452 and KR100721607.

### Summary of the invention

An object of the present invention is therefore to provide a system and a method which allow the condition of contamination of the rail to be simulated by means of a stable contaminant layer for any type of contaminant or any simulated speed.

Furthermore, it is possible to truly evaluate the influence of the contaminant with respect to the adhesion value between the wheel and the rail, and also to take into consideration, during the evaluation, the cleaning effect of the rail that is generated due to the sliding of the wheel on the rail.

The above and other objects and advantages are achieved, according to an aspect of the invention, by a system and a method for simulating the contact between wheel and rail for detecting the adhesion value having the features defined in the independent claims. Preferential implementations of the invention are defined in the dependent claims, which are intended as an integral part of the present description.

### Brief Description of the figures

The functional and structural characteristics of some preferred embodiments of a system and a method for simulating the contact between wheel and rail for detecting the adhesion value according to the invention will now be described. Reference is made to the accompanying drawings, wherein:
- figure 1 illustrates two systems for simulating the contact between wheel and rail according to the prior art;
- figure 2 illustrates a first embodiment of a system for simulating the contact between wheel and rail;
- figure 3 illustrates a second embodiment of a system for simulating the contact between wheel and rail;
- figure 4 illustrates a third embodiment of a system for simulating the contact between wheel and rail;
- figure 5 illustrates a fourth embodiment of a system for simulating the contact between wheel and rail;
- figure 6 illustrates a fifth embodiment of a system for simulating the contact between wheel and rail, wherein a rotation motor is coupled on the perimeter of the hollow cylindrical structure by means of respective toothed surfaces; and
- figure 7 illustrates a system for simulating the contact between wheel and rail comprising a wheel slide protection system, WSP.

### Detailed Description

Before explaining in detail a plurality of embodiments of the invention, it should be clarified that the invention is not limited in its application to the details of construction and to the configuration of the components provided in the following description or illustrated in the drawings. The invention may assume other embodiments and may be implemented or achieved in essentially different ways. It should also be understood that the phraseology and terminology have descriptive purposes and should not be construed as limiting. The use of "include" and "comprise" and their variations are to be understood as encompassing the elements set out to follow and their equivalents, as well as additional elements and their equivalents.

The system for simulating the contact between wheel and rail 1 according to the invention, in particular of a railway vehicle, comprises at least one hollow cylindrical structure 3, also called a roller, having a first diameter D1 and including a rail simulation surface 5 arranged integrally with an inner surface 7 of the hollow cylindrical structure 3.

The rail simulation surface 5 is preferably made of a metallic material, in particular the metallic material from which rails are usually constructed, for example, steel.

The system for simulating contact between wheel and rail 1 further comprises at least one wheel 9 having a second diameter D2, smaller than said first diameter D1, which includes a rolling surface 11 placed in contact with the rail simulation surface 5 of the hollow cylindrical structure 3.

The aforesaid arrangement allows one to avoid that the contaminant substance deposited on the roller by an injection system or manually is flung away by the roller due to centrifugal force.

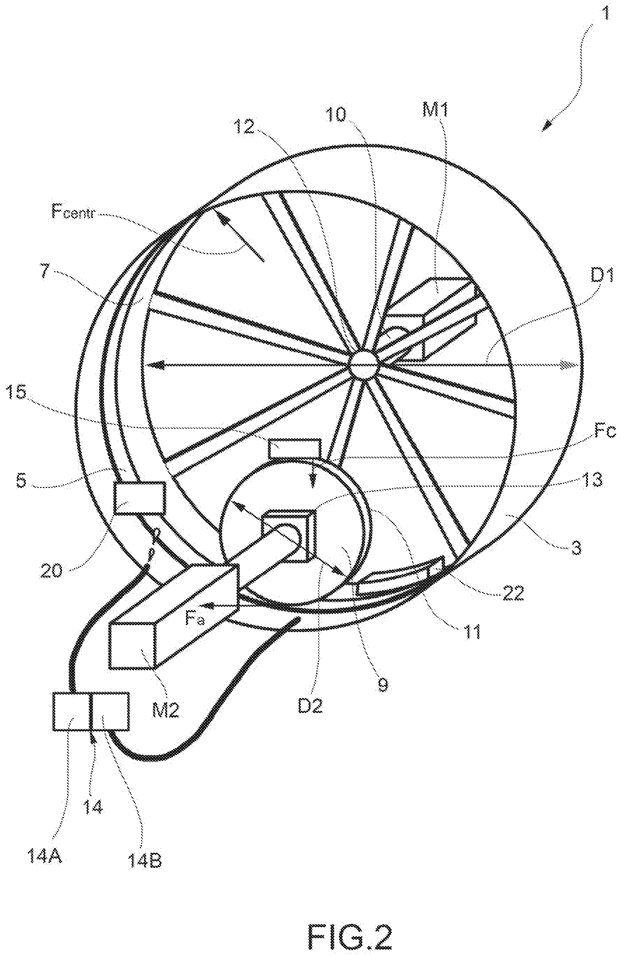

With reference to figure 2, the system for simulating the contact between wheel and rail 1 also includes a rotation motor M1 coupled to the cylindrical structure 3 to generate a rotation of said first cylindrical structure 3.

For example, the drive shaft 10 of the motor M1 is coupled with a respective hole 12 located at the center of the hollow cylindrical structure. For example, a plurality of rods, also called spokes, or a flat surface extending from the inner surface 7 of the hollow cylindrical structure 3 to the hole 12, may be used to hold said hole 12 in position.

Moreover, a second rotation motor M2 is associated with the wheel 9 to generate a rotation of said wheel 9 and to control the slippage thereof, i.e., the relative speed, with respect to the cylindrical structure 3.

A first sensor means 13 for torque, for example a torque transducer, is placed between the motor M2 and the wheel 9 to allow the adhesion force Fa developed in the contact point between the wheel 9 and the hollow cylindrical structure 3 to be measured.

A second sensor means 15 for load, for example a load cell, is located above the wheel 9 and allows the normal load force Fc acting on the rail simulation surface 5 to be measured.

The ratio between the adhesion force Fa and the normal load force Fc allows the real wheel-rail adhesion coefficient to be calculated.

The real wheel-rail adhesion coefficient is the estimated value indicative of the adhesion coefficient value that would occur in a normal condition of use of a railway vehicle.

The ratio between the adhesion force Fa and the normal load force Fc is calculated by processing means not illustrated in the figures.

Processing means may mean either a control unit belonging to the system for simulating contact between wheel and rail 1 or a remote processor adapted to receive the data measured by sensor means 13, 15 of the system for simulating the contact between wheel and rail 1, wherein the actual calculation of the real wheel-rail adhesion coefficient is performed.

The system for simulating the contact between wheel and rail 1 also includes at least one contaminant control system 14, adapted to recreate a variation of the friction condition between the wheel 9 and the rail simulation surface 5.

The variation of the friction condition may coincide with a decrease in the friction value if the injected contaminant substance is, for example, water, oil or leaves, while it may coincide with an increase in the friction value if the injected contaminant substance is, for example, sand.

The at least one contaminant control system 14 is placed in the proximity of each wheel 9.

The contaminant control system 14 comprises a contaminant injection system 14A to uniformly distribute the contaminant along the rail simulation surface 5.

Since the contaminant is distributed along the rail simulation surface 5, which is located on the inner surface 7 of the hollow cylindrical structure 3, the centrifugal force generated during rotation of the hollow cylindrical structure 3 facilitates checking the contaminant level. Unlike the known solutions, the contaminant, rather than being flung away from the rotating hollow cylindrical structure 3, is held along the rail simulation surface 5 by such centrifugal force.

The contaminant control device 14 may further comprise a contaminant removal system 14B, achieved, for example, with a jet of compressed air or a spatula or scraper or an aspirator, adapted to remove the contaminant from the cylindrical structure 3.

The contaminant control system 14 may comprise at least one contaminant sensor means 20 adapted to detect the level of contamination of the system for simulating the contact between wheel and rail 1. In this way, it is possible to establish whether to inject more contaminant, if the contaminant on the hollow cylindrical structure 3 is insufficient; or to stop injecting contaminant, if the contaminant on the cylindrical structure 3 is sufficient; or to remove contaminant, if its quantity on the hollow cylindrical structure 3 is excessive.

The contaminant sensor means 20 used may, for example, be at least one of either an optical sensor or a conductivity sensor.

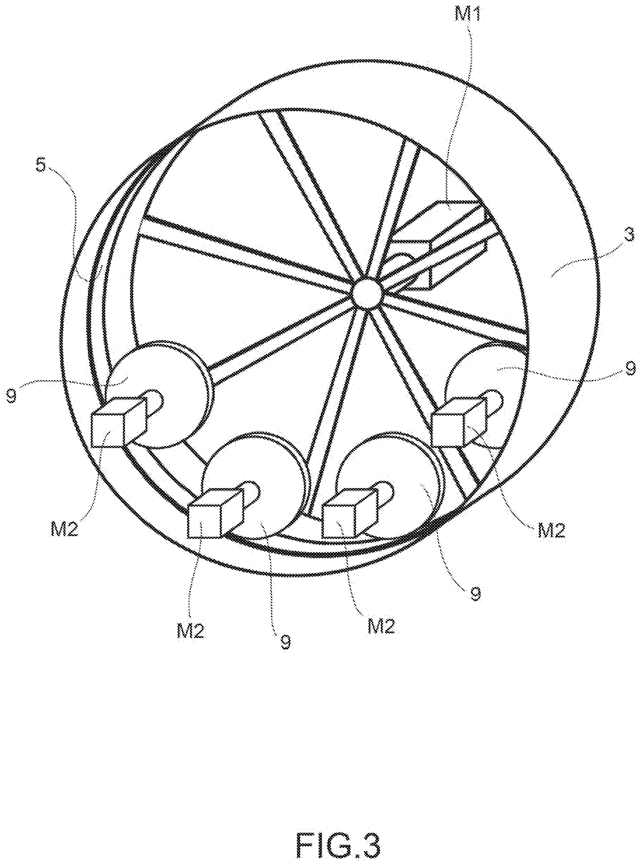

Figure 3 illustrates a second embodiment of a system for simulating the contact between wheel and rail 1. The difference with respect to the embodiment illustrated above consists in the fact that the wheels 9 are at least two in number. In the example illustrated in this figure, there are four wheels.

The four wheels 9 are arranged longitudinally aligned with each other, in contact with the track simulation surface 5, along a plane perpendicular to the rotation axis thereof.

The fact of using more than one wheel 9, and the fact that the contaminant material is retained on the inner surface 7 of the hollow cylindrical structure 3, allows the phenomenon of rail cleaning, which occurs at the close consecutive passage of several wheels 9 slipping on a rail, to be analyzed in detail.

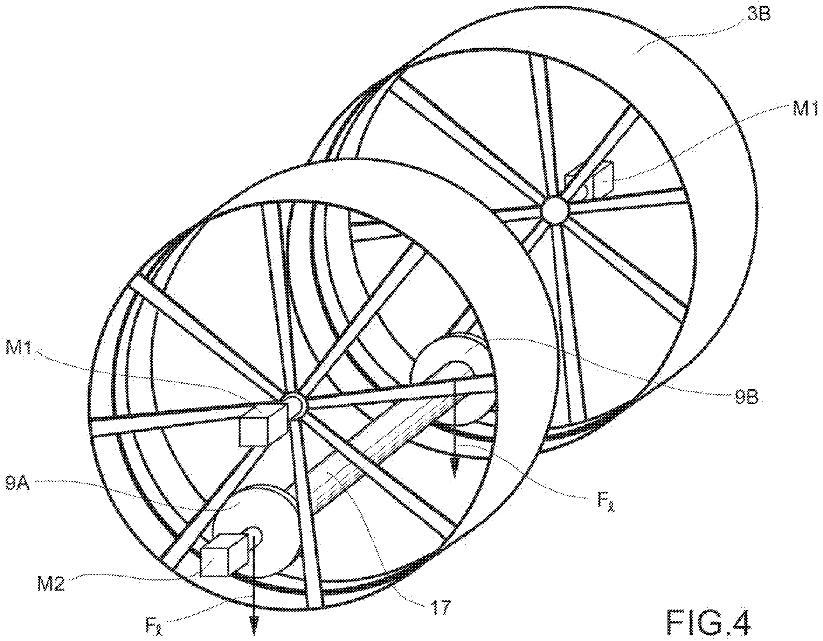

In a third embodiment illustrated in figure 4, the difference with respect to the embodiments illustrated above consists in the fact that there are two hollow cylindrical structures 3, which form a pair of cylindrical structures 3A, 3B, including a first hollow cylindrical structure 3A and a second hollow cylindrical structure 3B.

In particular, the second hollow cylindrical structure 3B is arranged parallel to the first hollow cylindrical structure 3A, along a common rotation axis thereof.

The wheels are divided in pairs of wheels 9A, 9B, each comprising a first wheel 9A, placed in contact with the rail simulation surface 5 of the first cylindrical structure 3A, and a second wheel 9B, placed in contact with the rail simulation surface 5 of the second cylindrical structure 3B.

The first and second wheels 9A, 9B are connected to each other by an axle 17.

The axle 17, and consequently the first and second wheels 9A, 9B, is rotated by means of the rotation motor M2.

Each hollow cylindrical structure 3A, 3B is rotated independently of the others by means of respective rotation motors M1.

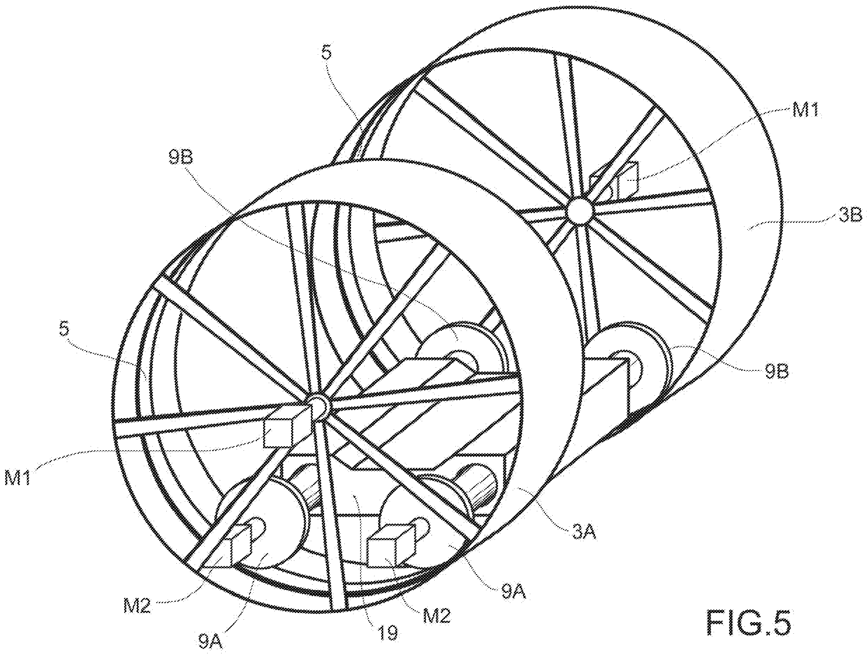

In a fourth embodiment, illustrated in figure 5, the pairs of wheels are at least two and are installed on a bogie 19 for a railway vehicle. The pairs of wheels are arranged longitudinally aligned with each other along a plane perpendicular to the rotation axis thereof.

To simulate the weight of a carriage acting on a rail, which occurs in a real case of travel of the railway vehicle on a rail, each wheel 9 is kept in contact with the rail simulation surface 5 through a load actuation system not illustrated in the figures, adapted to generate a force Fl to simulate the load generated by the weight of a carriage of a railway vehicle.

For example, the load actuation system may be achieved through hydraulic or pneumatic springs or actuators.

The system for simulating the contact between wheel and rail 1 may further include an electromagnetic braking system 22, known as a magnetic shoe or MTB (magnetic track brake) acting directly on the rail simulation surface 5 and positioned between the two wheels. Such system may optionally be activated to evaluate the impact on the braking force transferred to the hollow cylindrical structure 3 and to evaluate the impact thereof on the rail simulation surface 5.

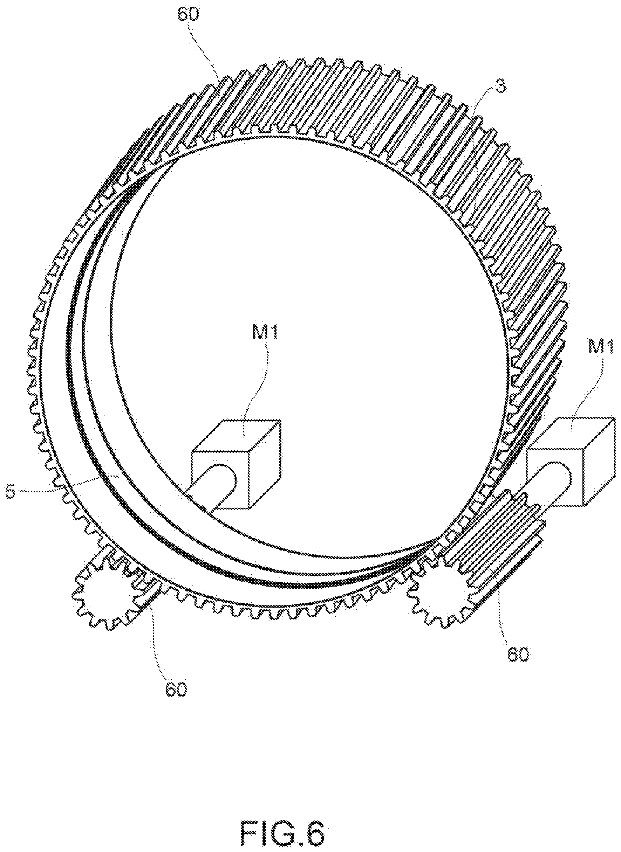

In a fifth alternative embodiment, illustrated in figure 6, at least one rotation motor M1, rather than being coupled with the respective hole 12 located in the center of the hollow cylindrical structure, is coupled on the perimeter of the hollow cylindrical structure 3, for example by means of respective toothed surfaces 60.

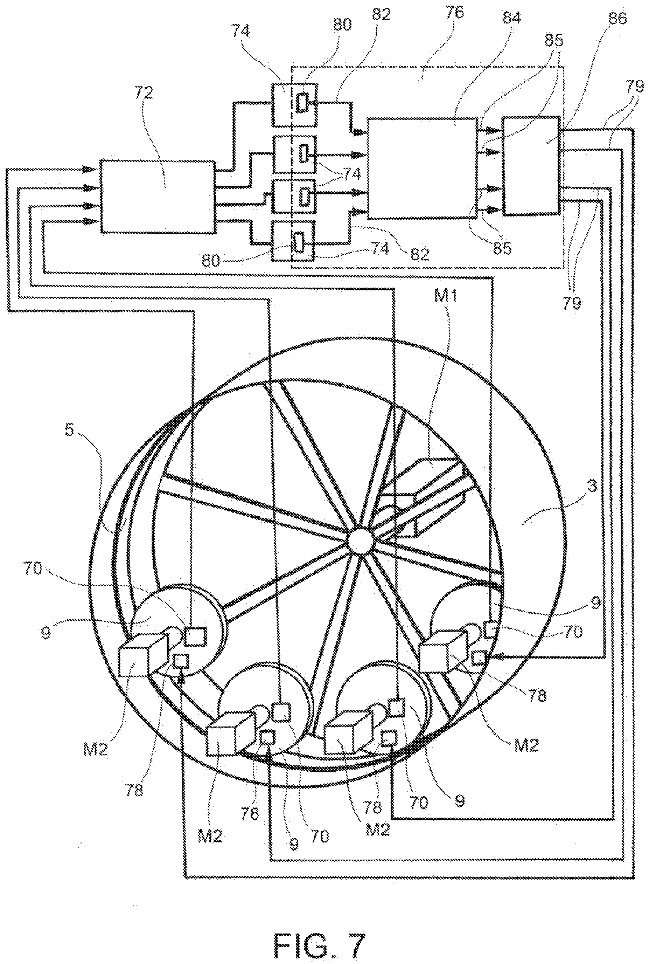

With reference to figure 7, a system for simulating the contact between wheel and rail comprising a wheel slide protection system 72, WSP, is illustrated.

In this case, by means of the system for simulating the contact between wheel and rail, it is also possible to simulate a real case wherein a railway vehicle has on board a wheel slide protection system 72, WSP, adapted to intervene when the wheels slip.

As illustrated in figure 7, the system for simulating the contact between wheel and rail 1 comprises a plurality of speed sensor means 70. Each speed sensor means 70 is adapted to detect an angular speed of one of said wheels 9.

The system for simulating the contact between wheel and rail 1 also comprises a slide protection system 72 of the wheels 9, WSP, adapted to determine the slide values of the wheels of which the angular speed has been detected.

The slide protection system 72 of the wheels 9, WSP, is also adapted to apply pressure to an air tank 74 adapted to simulate a brake cylinder for each wheel 9 of which the angular speed has been detected. The air tank may be a container inside of which a certain amount of air is enclosed.

The pressure value applied to the air tank 74 is generated as a function of slide values determined by the slide protection system 72, WSP. For example, the pressure value may be lower for the air tanks 74 associated with wheels that the WSP has determined to be slipping.

Moreover, the system for simulating the contact between wheel and rail 1 comprises a pressure/braking torque conversion system 76 adapted to convert the pressure value applied to the air tank 74 into respective braking torque signals 79 for each wheel, and a plurality of braking means 78, each associated with one of said wheels whose angular speed has been detected.

Each braking means is adapted to apply to its associated wheel a braking torque corresponding to the braking torque signal 79 received from the pressure/braking torque conversion system 76.

Still referring to figure 7, the pressure/braking torque conversion system 76 may include a plurality of pressure transducers 80, each acting to provide an electrical pressure signal 82, the value of which corresponds to one of the pressure values applied to the air tanks 74 generated by the slide protection system 72.

The pressure/braking torque conversion system 76 may further include a pressure/force conversion module 84 adapted to convert each electrical pressure signal 82 into an electrical braking force signal 85 and a force/torque conversion module 86 adapted to convert, according to the radius of the wheels, the electrical braking force signals 85 into respective braking torque signals 79 to be supplied to the respective braking means 78.

Figure 7 illustrates the case wherein the WSP module is used in a system for simulating the contact between wheel and rail according to the embodiment wherein the wheels 9 are arranged longitudinally aligned to each other along a plane perpendicular to the rotation axis thereof; however, such WSP system may also be used in any of the embodiments described above and shown in the figures, wherein a plurality of wheels are present.

In an alternative solution, the structure of the system for simulating the contact between wheel and rail may comprise a simplified structure and comprise at least one hollow cylindrical structure 3 having a first diameter D1 and including a rail simulation surface 5 integrally arranged with an inner surface 7 of said hollow cylindrical structure 3 and at least one wheel 9 having a second diameter D2 smaller than said first diameter D1, and including a rolling surface 11 placed in contact with said rail simulation surface 5 of the hollow cylindrical structure 3. In particular, said at least one wheel 9 may be a plurality of wheels 9 arranged longitudinally aligned with each other in contact with the rail simulation surface 5 along a plane perpendicular to the rotation axis thereof for simulating a condition of rail cleaning. Clearly, the concepts described above concerning the rotation motors M1 and M2, the first torque sensor means 13, the second load sensor means 15, the processing means, the contaminant control system 14, the contaminant sensor means 20, the plurality of cylindrical structures 3 forming a pair of cylindrical structures 3A, 3B, the first and the second wheel 9A, 9B connected to each other by an axle 17, the pairs of wheels installed on a bogie 19 for a railway vehicle, the load actuation system, the electromagnetic braking system 22, the toothed surfaces 60, and the wheel slide protection system 72, WSP, may be applied individually or combined also with this solution.

The invention further comprises a method for simulating the contact between wheel and rail 1, in particular of a railway vehicle, comprising the steps of:
- providing at least one hollow cylindrical structure 3 having a first diameter D1 and including a rail simulation surface 5 which is arranged integrally with an inner surface 7 of said hollow cylindrical structure 3; and
- providing inside said first cylindrical structure 3, in contact with said rail simulation surface 5 of the cylindrical structure 3, at least one wheel 9 having a second diameter D2 smaller than said first diameter D1;
- rotating said first cylindrical structure 3 by at least a first motor M1;
- rotating the at least one wheel 9 by at least one rotation motor M2 associated with said at least one wheel 9;
- injecting a contaminant substance on at least part of said rail simulation surface 5 through at least one contaminant control system 14;
- measuring an adhesion force Fa developed at the contact point between the at least one wheel 9 and the at least one cylindrical structure 3;
- checking and measuring a normal load force Fc on the rail simulation surface 5; and
- calculating the real wheel-rail adhesion coefficient by the ratio between the adhesion force Fa and the normal load force Fc.

The advantage provided by the invention is therefore to provide a system and a method which allow the condition of contamination of the rail to be simulated by means of a stable contaminant layer for any type of contaminant or simulated speed.

Furthermore, it is advantageously possible to truly evaluate the influence of the contaminant with respect to the adhesion value between the wheel and the rail, and to take into consideration, during the evaluation, also the cleaning effect of the rail that is generated due to the passage of a wheel.

Various aspects and embodiments of a system and a method for simulating the contact between wheel and rail 1 according to the invention have been described. It is understood that each embodiment may be combined with any other embodiment. The invention, moreover, is not limited to the described embodiments, but may be varied within the scope defined by the accompanying claims.

## Claims

1. A system for simulating the contact between wheel and rail (1), in particular of a rail vehicle, comprising:
- at least one hollow cylindrical structure (3) having a first diameter (D1) and including a rail simulation surface (5) arranged integrally with an internal surface (7) of said hollow cylindrical structure (3);
- at least one wheel (9) having a second diameter (D2) smaller than said first diameter (D1), and including a rolling surface (11) placed in contact with said rail simulation surface (5) of the hollow cylindrical structure (3);
- at least one rotation motor (M1) associated with said hollow cylindrical structure (3) for generating a rotation of said first cylindrical structure (3); **characterized in that** the system further comprises:
- at least a second rotation motor (M2) associated with the at least one wheel (9) for controlling a rotation of said at least one wheel (9);
- at least one contaminant control system (14), adapted to control the distribution of a contaminant on the rail simulation surface (5) for generating a variation of the friction condition between the at least one wheel (9) and the rail simulation surface (5);
- at least one first sensor means (13) for torque, adapted to measure an adhesion force (Fa) developed at the contact point between the at least one wheel (9) and the at least one cylindrical structure (3);
- at least one second sensor means (15) for load, adapted to measure a normal load force (Fc) on the rail simulation surface (5); and
- processing means adapted to calculate a real wheel-rail adhesion coefficient by the ratio between the adhesion force (Fa) and the normal load force (Fc).

2. A system for simulating the contact between wheel and rail (1) according to claim 1, wherein said at least one wheel (9) is a plurality of wheels (9); said wheels (9) being arranged longitudinally aligned with each other in contact with the rail simulation surface (5) along a plane perpendicular to the rotation axis thereof for simulating a condition of rail cleaning.

3. A system for simulating the contact between wheel and rail (1) according to any one of the preceding claims, wherein:
- said at least one hollow cylindrical structure (3) is at least a pair of cylindrical structures (3A, 3B) including a first hollow cylindrical structure (3A) and a second hollow cylindrical structure (3B); the second hollow cylindrical structure (3B) being arranged along a common rotation axis thereof;
- said at least one wheel (9) is at least a pair of wheels (9A, 9B) comprising a first wheel (9A), placed in contact with the rail simulation surface (5) of the first cylindrical structure (3A), and a second wheel (9B), placed in contact with the rail simulation surface (5) of the second cylindrical structure (3B); the first and the second wheel (9A, 9B) being connected to an axle (17).

4. A system for simulating the contact between wheel and rail (1) according to claim 3, wherein the pairs of wheels are at least two and are mounted on a bogie (19) for a railway vehicle; said pairs of wheels being arranged longitudinally aligned with each other along a plane perpendicular to the rotation axis thereof.

5. A system for simulating the contact between wheel and rail (1) according to claim 3 or 4, wherein the wheels (9) of an axle are controlled through a single rotation motor (M2).

6. A system for simulating the contact between wheel and rail (1) according to any one of the preceding claims, wherein each hollow cylindrical structure (3) is rotated independently from the other by a rotation motor (M1).

7. A system for simulating the contact between wheel and rail (1) according to any one of the preceding claims, wherein the contaminant control system (14) comprises a contaminant injection system (14A) for distributing the contaminant along the rail simulation surface (5), a contaminant removal system (14B) adapted to remove the contaminant from the rail simulation surface (5), and at least one contaminant level sensor means (20) adapted to detect the level of contamination of the system for simulating the contact between wheel and rail (1).

8. A system for simulating the contact between wheel and rail (1) according to any one of the preceding claims, wherein the contaminant level sensor means (20) is at least one of either an optical sensor or a conductivity sensor.

9. A system for simulating the contact between wheel and rail (1) according to any one of the preceding claims, wherein each wheel (9) is held in contact with the rail simulation surface (5) through a force (Fl) adapted to simulate a load generated by the weight of a carriage of a railway vehicle.

10. A system for simulating the contact between wheel and rail (1) according to any one of the preceding claims, wherein to the at least one wheel is associated an electromagnetic braking system (22), acting directly on the rail simulation surface (5).

11. A system for simulating the contact between wheel and rail (1) according to claim 10, wherein the electromagnetic braking system (22) is a magnetic shoe, MTB.

12. A system for simulating the contact between wheel and rail (1) according to any one of the preceding claims, wherein the at least one rotation motor (M1) associated with said hollow cylindrical structure (3) is coupled to the perimeter of said hollow cylindrical structure (3).

13. A system for simulating the contact between wheel and rail (1) according to any one of the preceding claims 2 to 12, comprising:
- a plurality of speed sensor means (70), each speed sensor means (70) being adapted to detect an angular speed of one of said wheels (9);
- a slide protection system (72) of the wheels (9), WSP, adapted to determine the slide values of the wheels whose angular speed has been detected and to apply pressure to an air tank (74) adapted to simulate a brake cylinder for each wheel (9) of which the angular speed has been detected, the pressure value applied to the air tank (74) being generated as a function of slide values determined by the slide protection system (72), WSP;
- a pressure/braking torque conversion system (76) adapted to convert the pressure value detected in the air tank (74) into respective braking torque signals (79) for each wheel;
- a plurality of braking means (78) each associated with one of said wheels of which the angular speed has been detected; each braking means being adapted to apply to its associated wheel a braking torque corresponding to the braking torque signal (79) received from the pressure/braking torque conversion system (76).

14. System for simulating the contact between wheel and rail (1) according to claim 13, wherein the pressure/braking torque conversion system (76) includes:
- a plurality of pressure transducers (80), wherein each pressure transducer is adapted to provide an electrical pressure signal (82) the value of which corresponds to one of the pressure values applied to the air tanks (74) by means of the slide protection system (72);
- a pressure/force conversion module (84) adapted to convert each electrical pressure signal (82) into an electrical braking force signal (85);
- a force/torque conversion module (86) adapted to convert, according to the radius of the wheels, the electrical braking force signals (85) into respective braking torque signals (79) to be supplied to the respective braking means (78).

15. A method for simulating the contact between wheel and rail (1), in particular of a railway vehicle, comprising the steps of:
- providing at least a hollow cylindrical structure (3) having a first diameter (D1) and including a rail simulation surface (5), which is arranged integrally with an inner surface (7) of said hollow cylindrical structure (3);
- providing inside said first hollow cylindrical structure (3), in contact with said rail simulation surface (5) of the hollow cylindrical structure (3), at least one wheel (9) having a second diameter (D2) smaller than said first diameter (D1);
- rotating said first hollow cylindrical structure (3) by means of at least a first motor (M1); **characterized in that** the method further comprises the steps of:
- rotating the at least one wheel (9) by at least one rotation motor (M2) associated with said at least one wheel (9);
- injecting a contaminant substance on at least part of said rail simulation surface (5) by means of at least one contaminant control system (14);
- measuring an adhesion force (Fa) developed at the contact point between the at least one wheel (9) and the at least one cylindrical structure (3) by means of at least a first sensor means (13) for torque;
- checking and measuring a normal load force (Fc) on the rail simulation surface (5) by means of at least one second sensor means (15) for load; and
- calculating the real wheel-rail adhesion coefficient by the ratio between the adhesion force (Fa) and the normal load force (Fc).

## Patentansprüche

1. System zum Simulieren des Kontakts zwischen Rad und Schiene (1), insbesondere eines Schienenfahrzeugs, mit:
- mindestens einer hohlen zylindrischen Struktur (3), die einen ersten Durchmesser (D1) aufweist und eine Schienensimulationsoberfläche (5), die integral mit einer inneren Oberfläche (7) besagter hohlen zylindrischen Struktur (3) angeordnet ist, aufweist;
- mindestens einem Rad (9), das einen zweiten Durchmesser (D2) kleiner als besagter erster Durchmesser (D1) aufweist und eine Rolloberfläche (11), die mit besagter Schienensimulationsoberfläche (5) der hohlen zylindrischen Struktur (3) in Kontakt platziert ist, aufweist;
- mindestens einem Drehmotor (M1), der mit besagter hohlen zylindrischen Struktur (3) assoziiert ist, zum Erzeugen einer Drehung besagter ersten zylindrischen Struktur (3); **dadurch gekennzeichnet, dass** das System ferner aufweist:
- mindestens einen zweiten Drehmotor (M2), der mit dem mindestens einen Rad (9) assoziiert ist, zum Steuern einer Drehung besagten mindestens einen Rads (9);
- mindestens ein Verunreinigungssteuerungssystem (14), das dazu angepasst ist, die Verteilung einer Verunreinigung auf der Schienensimulationsoberfläche (5) zum Erzeugen einer Variation der Reibungsbedingung zwischen dem mindestens einen Rad (9) und der Schienensimulationsoberfläche (5) zu steuern;
- mindestens ein erstes Sensormittel (13) für Drehmoment, das dazu angepasst ist, eine Adhäsionskraft (Fa), die an dem Kontaktpunkt zwischen dem mindestens einen Rad (9) und der mindestens einen zylindrischen Struktur (3) entwickelt wird, zu messen;
- mindestens ein zweites Sensormittel (15) für Belastung, das dazu angepasst ist, eine Normalbelastungskraft (Fc) auf der Schienensimulationsoberfläche (5) zu messen; und
- ein Prozessierungsmittel, das dazu angepasst ist, einen tatsächlichen Rad-Schiene-Adhäsionskoeffizienten durch das Verhältnis zwischen der Adhäsionskraft (Fa) und der Normalbelastungskraft (Fc) zu berechnen.

2. System zum Simulieren des Kontakts zwischen Rad und Schiene (1) nach Anspruch 1, bei dem besagtes mindestens eine Rad (9) eine Mehrzahl von Rädern (9) ist; welche besagten Räder (9) longitudinal zueinander ausgerichtet in Kontakt mit der Schienensimulationsoberfläche (5) entlang einer Ebene senkrecht zu der Drehachse davon zum Simulieren einer Bedingung einer Schienenreinigung angeordnet sind.

3. System zum Simulieren des Kontakts zwischen Rad und Schiene (1) nach einem der vorhergehenden Ansprüche, bei dem:
- besagte mindestens eine hohle zylindrische Struktur (3) zumindest ein Paar zylindrischer Strukturen (3A, 3B) ist, das eine erste hohle zylindrische Struktur (3A) und eine zweite hohle zylindrische Struktur (3B) aufweist; welche zweite hohle zylindrische Struktur (3B) entlang einer gemeinsamen Drehachse davon angeordnet ist;
- besagtes mindestens eine Rad (9) zumindest ein Paar von Rädern (9A, 9B) ist, das ein erstes Rad (9A), das in Kontakt mit der Schienensimulationsoberfläche (5) der ersten zylindrischen Struktur (3A) platziert ist, und ein zweites Rad (9B), das in Kontakt mit der Schienensimulationsoberfläche (5) der zweiten zylindrischen Struktur (3B) platziert ist, aufweist; welches erste und welches zweite Rad (9A, 9B) mit einer Achse (17) verbunden sind.

4. System zum Simulieren des Kontakts zwischen Rad und Schiene (1) nach Anspruch 3, bei dem die Paare von Rädern mindestens zwei sind und auf einem Fahrwerk (19) für ein Schienenfahrzeug montiert sind; welche besagten Paare von Rädern longitudinal zueinander ausgerichtet entlang einer Ebene senkrecht zu der Drehachse davon angeordnet sind.

5. System zum Simulieren des Kontakts zwischen Rad und Schiene (1) nach Anspruch 3 oder 4, bei dem die Räder (9) einer Achse durch einen einzelnen Drehmotor (M2) gesteuert werden.

6. System zum Simulieren des Kontakts zwischen Rad und Schiene (1) nach einem der vorhergehenden Ansprüche, bei dem jede hohle zylindrische Struktur (3) unabhängig von der anderen durch einen Drehmotor (M1) gedreht wird.

7. System zum Simulieren des Kontakts zwischen Rad und Schiene (1) nach einem der vorhergehenden Ansprüche, bei dem das Verunreinigungssteuerungssystem (14) ein Verunreinigungseingabesystem (14A) zum Verteilen der Verunreinigung entlang der Schienensimulationsoberfläche (5), ein Verunreinigungsentfernungssystem (14B), das dazu angepasst ist, die Verunreinigung von der Schienensimulationsoberfläche (5) zu entfernen, und mindestens ein Verunreinigungsgradsensormittel (20), das dazu angepasst ist, den Verunreinigungsgrad des Systems zum Simulieren des Kontakts zwischen Rad und Schiene (1) zu erfassen, aufweist.

8. System zum Simulieren des Kontakts zwischen Rad und Schiene (1) nach einem der vorhergehenden Ansprüche, bei dem das Verunreinigungsgradsensormittel (20) mindestens einer von entweder einem optischen Sensor oder einem Leitfähigkeitssensor ist.

9. System zum Simulieren des Kontakts zwischen Rad und Schiene (1) nach einem der vorhergehenden Ansprüche, bei dem jedes Rad (9) durch eine Kraft (Fl), die dazu angepasst ist, eine Belastung, die durch das Gewicht eines Wagens eines Schienenfahrzeugs erzeugt wird, zu simulieren, in Kontakt mit der Schienensimulationsoberfläche (5) gehalten wird.

10. System zum Simulieren des Kontakts zwischen Rad und Schiene (1) nach einem der vorhergehenden Ansprüche, bei dem mit dem mindestens einen Rad ein elektromagnetisches Bremssystem (22), das direkt auf die Schienensimulationsoberfläche (5) wirkt, assoziiert ist.

11. System zum Simulieren des Kontakts zwischen Rad und Schiene (1) nach Anspruch 10, bei dem das elektromagnetische Bremssystem (22) ein Magnetschuh, MTB, ist.

12. System zum Simulieren des Kontakts zwischen Rad und Schiene (1) nach einem der vorhergehenden Ansprüche, bei dem der mindestens eine Drehmotor (M1), der mit besagter hohlen zylindrischen Struktur (3) assoziiert ist, an den Umfang besagter hohlen zylindrischen Struktur (3) gekoppelt ist.

13. System zum Simulieren des Kontakts zwischen Rad und Schiene (1) nach einem der vorhergehenden Ansprüche 2 bis 12, mit:
- einer Mehrzahl von Geschwindigkeitssensormitteln (70), von denen jedes Geschwindigkeitssensormittel (70) dazu angepasst ist, eine Winkelgeschwindigkeit eines besagter Räder (9) zu erfassen;
- einem Gleitschutzsystem (72) der Räder (9), WSP, das dazu angepasst ist, die Gleitwerte der Räder, deren Winkelgeschwindigkeit erfasst worden ist, zu bestimmen und Druck auf einen Lufttank (74), der dazu angepasst ist, einen Bremszylinder zu simulieren, für jedes Rad (9), von dem die Winkelgeschwindigkeit erfasst worden ist, auszuüben, bei dem der Druckwert, der auf den Lufttank (74) ausgeübt wird, als eine Funktion von Gleitwerten, die durch das Gleitschutzsystem (72), WSP, bestimmt werden, erzeugt wird;
- einem Druck/Bremsdrehmoment-Umwandlungssystem (76), das dazu angepasst ist, den Druckwert, der in dem Lufttank (74) erfasst wird, in jeweilige Bremsdrehmomentsignale (79) für jedes Rad umzuwandeln;
- einer Mehrzahl von Bremsmitteln (78), die jeweils mit einem besagter Räder, von denen die Winkelgeschwindigkeit erfasst worden ist, assoziiert sind; bei denen jedes Bremsmittel dazu angepasst ist, auf sein assoziiertes Rad ein Bremsdrehmoment auszuüben, das dem Bremsdrehmomentsignal (79), das von dem Druck/Bremsdrehmoment-Umwandlungssystem (76) empfangen wird, entspricht.

14. System zum Simulieren des Kontakts zwischen Rad und Schiene (1) nach Anspruch 13, bei dem das Druck/Bremsdrehmoment-Umwandlungssystem (76) aufweist:
- eine Mehrzahl von Druckwandlern (80), bei denen jeder Druckwandler dazu angepasst ist, ein elektrisches Drucksignal (82) vorzusehen, dessen Wert einem der Druckwerte, die auf die Lufttanks (74) mittels des Gleitschutzsystems (72) ausgeübt werden, entspricht;
- ein Druck/Kraft-Umwandlungsmodul (84), das dazu angepasst ist, jedes elektrische Drucksignal (82) in ein elektrisches Bremskraftsignal (85) umzuwandeln;
- ein Kraft/Drehmoment-Umwandlungsmodul (86), das dazu angepasst ist, gemäß dem Radius der Räder die elektrischen Bremskraftsignale (85) in jeweilige Bremsdrehmomentsignale (79), die den jeweiligen Bremsmitteln (78) zuzuführen sind, umzuwandeln.

15. Verfahren zum Simulieren des Kontakts zwischen Rad und Schiene (1), insbesondere eines Schienenfahrzeugs, mit den Schritten:
- Vorsehen zumindest einer hohlen zylindrischen Struktur (3), die einen ersten Durchmesser (D1) aufweist und eine Schienensimulationsoberfläche (5), die integral mit einer inneren Oberfläche (7) besagter hohlen zylindrischen Struktur (3) angeordnet ist, aufweist;
- Vorsehen innerhalb besagter ersten hohlen zylindrischen Struktur (3), in Kontakt mit besagter Schienensimulationsoberfläche (5) der hohlen zylindrischen Struktur (3), mindestens eines Rads (9), das einen zweiten Durchmesser (D2) kleiner als besagter erster Durchmesser (D1) aufweist;
- Drehen besagter ersten hohlen zylindrischen Struktur (3) mittels zumindest eines ersten Motors (M1); **dadurch gekennzeichnet, dass** das Verfahren ferner die Schritte:
- Drehen des mindestens einen Rads (9) mittels mindestens eines Drehmotors (M2), der mit besagtem mindestens einen Rad (9) assoziiert ist;
- Eingeben einer Verunreinigungssubstanz auf zumindest einen Teil besagter Schienensimulationsoberfläche (5) mittels mindestens eines Verunreinigungssteuerungssystems (14);
- Messen einer Adhäsionskraft (Fa), die an dem Kontaktpunkt zwischen dem mindestens einen Rad (9) und der mindestens einen zylindrischen Struktur (3) entwickelt wird, mittels zumindest eines ersten Sensormittels (13) für Drehmoment;
- Prüfen und Messen einer Normalbelastungskraft (Fc) auf der Schienensimulationsoberfläche (5) mittels mindestens eines zweiten Sensormittels (15) für Belastung; und
- Berechnen des tatsächlichen Rad-Schiene-Adhäsionskoeffizienten durch das Verhältnis zwischen der Adhäsionskraft (Fa) und der Normalbelastungskraft (Fc) aufweist.

## Revendications

1. Système permettant de simuler le contact entre une roue et un rail (1), en particulier d'un véhicule ferroviaire, comprenant :
- au moins une structure cylindrique creuse (3) ayant un premier diamètre (D1) et incluant une surface de simulation de rail (5) agencée d'un seul bloc avec une surface interne (7) de ladite structure cylindrique creuse (3) ;
- au moins une roue (9) ayant un second diamètre (D2) plus petit que ledit premier diamètre (D1), et incluant une surface de roulement (11) placée en contact avec ladite surface de simulation de rail (5) de la structure cylindrique creuse (3) ;
- au moins un moteur de rotation (M1) associé à ladite structure cylindrique creuse (3) pour générer une rotation de ladite première structure cylindrique (3) ; **caractérisé en ce que** le système comprend en outre :
- au moins un second moteur de rotation (M2) associé à l'au moins une roue (9) pour commander une rotation de ladite au moins une roue (9) ;
- au moins un système de commande de contaminant (14), adapté pour commander la distribution d'un contaminant sur la surface de simulation de rail (5) pour générer une variation de la condition de frottement entre l'au moins une roue (9) et la surface de simulation de rail (5) ;
- au moins un premier moyen capteur (13) pour un couple, adapté pour mesurer une force d'adhérence (Fa) développée au point de contact entre l'au moins une roue (9) et l'au moins une structure cylindrique (3) ;
- au moins un second moyen capteur (15) pour une charge, adapté pour mesurer une force de charge normale (Fc) sur la surface de simulation de rail (5) ; et
- des moyens de traitement adaptés pour calculer un coefficient d'adhérence roue-rail réel par le rapport entre la force d'adhérence (Fa) et la force de charge normale (Fc).

2. Système permettant de simuler le contact entre une roue et un rail (1) selon la revendication 1, dans lequel ladite au moins une roue (9) est une pluralité de roues (9) ; lesdites roues (9) étant agencées alignées de manière longitudinale les unes par rapport aux autres en contact avec la surface de simulation de rail (5) le long d'un plan perpendiculaire à l'axe de rotation de celles-ci pour simuler une condition de nettoyage de rail.

3. Système permettant de simuler le contact entre une roue et un rail (1) selon l'une quelconque des revendications précédentes, dans lequel :
- ladite au moins une structure cylindrique creuse (3) est au moins une paire de structures cylindriques (3A, 3B) incluant une première structure cylindrique creuse (3A) et une seconde structure cylindrique creuse (3B) ; la seconde structure cylindrique creuse (3B) étant agencée le long d'un axe de rotation commun de celles-ci ;
- ladite au moins une roue (9) est au moins une paire de roues (9A, 9B) comprenant une première roue (9A), placée en contact avec la surface de simulation de rail (5) de la première structure cylindrique (3A), et une seconde roue (9B), placée en contact avec la surface de simulation de rail (5) de la seconde structure cylindrique (3B) ; la première et la seconde roue (9A, 9B) étant reliées à un essieu (17).

4. Système permettant de simuler le contact entre une roue et un rail (1) selon la revendication 3, dans lequel les paires de roues sont au moins deux et sont montées sur un bogie (19) pour un véhicule de chemin de fer ; lesdites paires de roues étant agencées alignées de manière longitudinale les unes par rapport aux autres le long d'un plan perpendiculaire à l'axe de rotation de celles-ci.

5. Système permettant de simuler le contact entre une roue et un rail (1) selon la revendication 3 ou 4, dans lequel les roues (9) d'un essieu sont commandées par l'intermédiaire d'un moteur à rotation unique (M2).

6. Système permettant de simuler le contact entre une roue et un rail (1) selon l'une quelconque des revendications précédentes, dans lequel chaque structure cylindrique creuse (3) est entraînée en rotation de manière indépendante par rapport à l'autre par un moteur de rotation (M1).

7. Système permettant de simuler le contact entre une roue et un rail (1) selon l'une quelconque des revendications précédentes, dans lequel le système de commande de contaminant (14) comprend un système d'injection de contaminant (14A) permettant de distribuer le contaminant le long de la surface de simulation de rail (5), un système de retrait de contaminant (14B) adapté pour retirer le contaminant de la surface de simulation de rail (5), et au moins un moyen capteur de niveau de contaminant (20) adapté pour détecter le niveau de contamination du système permettant de simuler le contact entre une roue et un rail (1).

8. Système permettant de simuler le contact entre une roue et un rail (1) selon l'une quelconque des revendications précédentes, dans lequel le moyen capteur de niveau de contaminant (20) est au moins un parmi un capteur optique ou un capteur de conductivité.

9. Système permettant de simuler le contact entre une roue et un rail (1) selon l'une quelconque des revendications précédentes, dans lequel chaque roue (9) est maintenue en contact avec la surface de simulation de rail (5) par l'intermédiaire d'une force (F1) adaptée pour simuler une charge générée par le poids d'un wagon d'un véhicule de chemin de fer.

10. Système permettant de simuler le contact entre une roue et un rail (1) selon l'une quelconque des revendications précédentes, dans lequel à l'au moins une roue est associé un système de freinage électromagnétique (22), agissant directement sur la surface de simulation de rail (5).

11. Système permettant de simuler le contact entre une roue et un rail (1) selon la revendication 10, dans lequel le système de freinage électromagnétique (22) est un sabot magnétique, MTB.

12. Système permettant de simuler le contact entre une roue et un rail (1) selon l'une quelconque des revendications précédentes, dans lequel l'au moins un moteur de rotation (M1) associé à ladite structure cylindrique creuse (3) est accouplé au périmètre de ladite structure cylindrique creuse (3).

13. Système permettant de simuler le contact entre une roue et un rail (1) selon l'une quelconque des revendications 2 à 12 précédentes, comprenant :
- une pluralité de moyens capteurs de vitesse (70), chaque moyen capteur de vitesse (70) étant adapté pour détecter une vitesse angulaire d'une desdites roues (9) ;
- un système de protection de glissement (72) des roues (9), WSP, adapté pour déterminer les valeurs de glissement des roues dont une vitesse angulaire a été détectée et pour appliquer une pression sur un réservoir d'air (74) adapté pour simuler un cylindre de frein pour chaque roue (9) dont la vitesse angulaire a été détectée, la valeur de pression appliquée sur le réservoir d'air (74) étant générée en fonction de valeurs de glissement déterminées par le système de protection de glissement (72), WSP ;
- un système de conversion pression/couple de freinage (76) adapté pour convertir la valeur de pression détectée dans le réservoir d'air (74) en signaux de couple de freinage (79) respectifs pour chaque roue ;
- une pluralité de moyens de freinage (78) chacun étant associé à une desdites roues dont la vitesse angulaire a été détectée ; chaque moyen de freinage étant adapté pour appliquer à sa roue associé un couple de freinage correspondant au signal de couple de freinage (79) reçu du système de conversion pression/couple de freinage (76).

14. Système permettant de simuler le contact entre une roue et un rail (1) selon la revendication 13, dans lequel le système de conversion pression/couple de freinage (76) inclut :
- une pluralité de transducteurs de pression (80), dans lequel chaque transducteur de pression est adapté pour fournir un signal électrique de pression (82) dont la valeur correspond à une des valeurs de pression appliquées sur les réservoirs d'air (74) au moyen du système de protection de glissement (72) ;
- un module de conversion pression/force (84) adapté pour convertir chaque signal électrique de pression (82) en un signal électrique de force de freinage (85) ;
- un module de conversion force/couple (86) adapté pour convertir, selon le rayon des roues, les signaux électriques de force de freinage (85) en signaux de couple de freinage (79) respectifs devant être fournis aux moyens de freinage (78) respectifs.

15. Procédé permettant de simuler le contact entre une roue et un rail (1), en particulier d'un véhicule de chemin de fer, comprenant les étapes consistant à :
- fournir au moins une structure cylindrique creuse (3) ayant un premier diamètre (D1) et incluant une surface de simulation de rail (5), qui est agencée d'un seul bloc avec une surface intérieure (7) de ladite structure cylindrique creuse (3) ;
- fournir à l'intérieur de ladite première structure cylindrique creuse (3), en contact avec ladite surface de simulation de rail (5) de la structure cylindrique creuse (3), au moins une roue (9) ayant un second diamètre (D2) plus petit que ledit premier diamètre (D1) ;
- faire tourner ladite première structure cylindrique creuse (3) au moyen d'au moins un premier moteur (M1) ; **caractérisé en ce que** le procédé comprend en outre les étapes consistant à :
- faire tourner l'au moins une roue (9) par au moins un moteur de rotation (M2) associé à ladite au moins une roue (9) ;
- injecter une substance contaminante sur au moins une partie de ladite surface de simulation de rail (5) au moyen d'au moins un système de commande de contaminant (14) ;
- mesurer une force d'adhérence (Fa) développée au point de contact entre l'au moins une roue (9) et l'au moins une structure cylindrique (3) au moyen d'au moins un premier moyen capteur (13) pour un couple ;
- vérifier et mesurer une force de charge normale (Fc) sur la surface de simulation de rail (5) au moyen d'au moins un second moyen capteur (15) pour une charge ; et
- calculer le coefficient d'adhérence roue-rail réel par le rapport entre la force d'adhérence (Fa) et la force de charge normale (Fc).
